# EUROPEAN PATENT SPECIFICATION

(11) **EP 2 810 029 B1**
(45) Date of publication and mention of the grant of the patent: **28.06.2023**
(21) Application number: 13709310.0
(22) Date of filing: 21.01.2013
(51) Int. Cl.: G01J 1/42, G01J 1/02, G01J 1/08, G01J 1/12, G01J 1/28, G01J 3/02, G01J 3/10, G01J 3/50, G01M 11/00

(54) **PORTABLE LIGHT MEASUREMENT SYSTEM**
TRAGBARE LICHTMESSVORRICHTUNG
SYSTÈME PORTABLE DE MESURE DE LUMIÈRE

(30) Priority: 03.02.2012 DK 201200091
(43) Date of publication of application: 10.12.2014
(73) Proprietor: VIP 2 IVS, 1370 Copenhagen K (DK)
(72) Inventor: KRAUSE, Christian, 1370 Copenhagen K (DK)
(86) International application number: PCT/DK2013/000010
(87) International publication number: WO 2013/113315

(56) References cited:
- WO-A1-97/42473
- WO-A1-2008/003172
- JP-A- 2011 002 412
- Christopher Carlsen: "Analysis of low-cost testing methods for LED lumen maintenance of off-grid lighting products", A Thesis Presented to The Faculty of Environmental Resources Engineering In Partial Fulfillment Of the Requirements for the Degree Master of Science Environmental Resources Engineering, 1 May 2011 (2011-05-01), pages 1-179, XP055514552, US Retrieved from the Internet: URL:http://humboldt-dspace.calstate.edu/bi tstream/handle/2148/766/Carlsen-HSUThesis- May2011.pdf?sequence=1 [retrieved on 2022-02-26]

## Description

### Background:

Lighting fixtures and light sources are going through a technology shift, from the old incandescent types to fluorescent and LED types. The shift has lead to the development of more environmentally efficient lighting types and increased the variety of environmental lighting solutions.

This technology shift poses different challenges, as the new lighting technologies are very different from the old ones. Simultaneously an increasing number of new lighting manufactures have entered the lighting industry producing everything from lighting fixtures to light sources.

The rapid technology shift and the extended number of suppliers of lighting sources and fixtures have lead to quality issues, as the quality varies much from manufacturer to manufacturer.

The old incandescent lighting sources were relative simple to evaluate due to the simplicity of the technology: Power consumption would normally be relative to light output and the quality of the light would always be high due to the physics of incandescent light sources.

This is not the case with newer technologies such as fluorescent and LED lighting where light output and quality can vary substantially from supplier to supplier thus making it difficult for customers to evaluate the product without first having to go through costly laboratory tests. There is therefore a need for a more simple way of evaluating the quality and efficiency of light sources so that comparisons of various light sources can be made quicker and without expert involvement.

Devices for characterizing light sources are known from WO97/42473 A1, WO2008/003172A1, JP2011002412A and Christopher Carlsen: "Analysis of low-cost testing methods for LED lumen maintenance of off-grid lighting products", thesis, 1 May 2011 (XP055514552).

### The invention:

This invention creates a portable way of measuring any light source, including both larger illuminative devices such as complete lighting fixtures and smaller light sources consisting of a more limited number of light sources. In this invention the name "light source" will be used to describe any kind of illuminative device.

A number of parameters are necessary in order to evaluate a light source. These are primarily: (i) power consumption, (ii) combined light output, (iii) angular distribution, (iv) colour temperature and (v) light quality. More parameters can be added depending on the level of detail required for the evaluation. In this description we will concentrate on the parameters mentioned above without discarding the possibility for adding more parameters to the evaluation in the future.

Other possible parameters that could be added to the evaluation could be: (vi) Light flickering due to power supply, (vii) dimming levels to evaluate if light bulb could be dimmed using standard dimming methods, (viii) light output variations based on variation in supply voltage, (ix) colour variations as a function of light angle etc.

Today the parameters are evaluated using a number of measurement equipment. Power consumption is for instance measured using a power meter and the total light output is measured using an integrating sphere (also known as an Ulbricht sphere) that sums up all the light radiated in any angle. The angular distribution of light is measured using a rotating platform (Also known as a goniometer) with a light sensor placed at a large distance from the light source. The quality and colour temperature of the light is measured using a spectrometer where the spectrum of light emitted by the light source is calculated so that the colour of the light and a CRI index is found. The CRI index, also known as a "Colour Rendering Index", is a number indicating colour fullness with a number from 0-100 where 100 is the best and 0 the worst.

The main parameters for light measurement can be summed up as follows:
- Combined light output
- Angular distribution
- CRI index
- Colour / Colour temperature
- Power consumption

To measure the above mentioned 5 parameters requires a Iot of equipment and requires a lot of physical space as this type of equipment take up a Iot of space. Additionally expert knowledge is also required in order to perform the measurements and setup the equipment correctly, thus making any evaluation of light sources costly and time consuming.

Creating a portable easy to use system requires a radical new way of thinking. All of the parameters should be able to be measured within one portable system that is easy to carry around. The innovative step is how to make total light output measurement with a small portable system.

A new way of measuring combined light output must be invented. The total amount of visible light output is normally measured in the value lumen, but other standards may be used. Today lumen is measured by using an intergrading sphere. This is a quite heavy instrument, which cannot be used in a portable system.

The invention is defined in the appended claims.

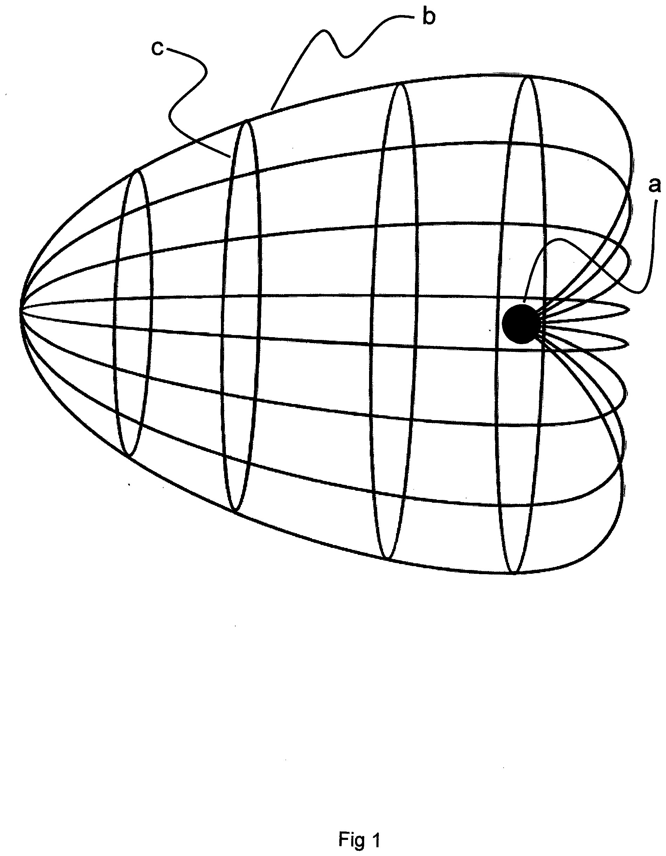

In order to illustrate how this new innovative light measurement system works we now describe the background behind the invention in more detail:
An illuminative device fig 1 (a) emits light in a number of directions in a 3 dimensional environment, thus making an integrating sphere an effective way to sum up all light radiated in any direction. Such a radiated field from a light source can be seen in fig 1 (b).

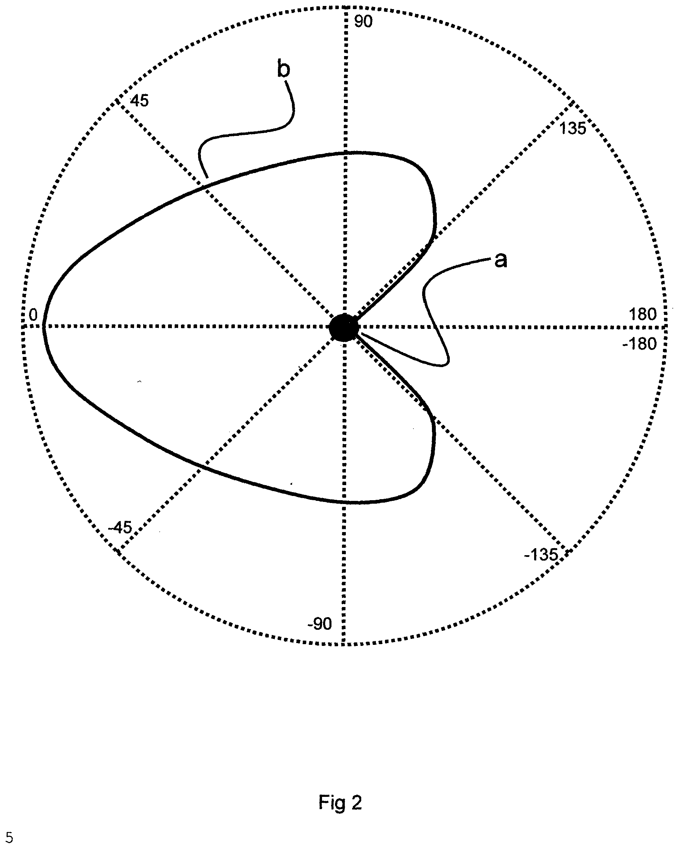

If we take a light source such as fig 2 (a) and spin it 360 degrees and at the same time measure it at a certain distance, as a function of its angle, we can calculate the angular distribution of the light radiated, which is a cross section of the complete radiated field. This cross section measurement can be seen in fig 2.

Calculating the combined light output from a cross section of a radiated field is not possible as it only gives limited information about the radiated field. But if we have information about the shape of the field and at which orientation the light source was measured we can calculate the combined output. If we look at fig 1(c) we can see that the radiated field has a circular shape due to the light source being of a round shape such as a light bulb or spot.

If we make an angular measurement of the non-circular part by ensuring the correct physical orientation of the light source, as shown on fig 1 (b), we would get a result like shown in fig 2 (b). We can then simply mathematically calculate the combined output if we for example know that the measured light source is circular (that the tangent two-dimensional plane is circular).

Therefore the user could select a series of standard field shapes before measuring a light source, thereby making it possible to measure and calculate the combined output of light by only measuring the angular distribution at one cross section of the light source. This way of measuring the combined output based on a selection of pre created field distributions creates a new smart and easy way of measuring a light source where the light source only needs to be rotated around one axis to complete a measurement, thus simplifying the mechanical construction of a measuring device.

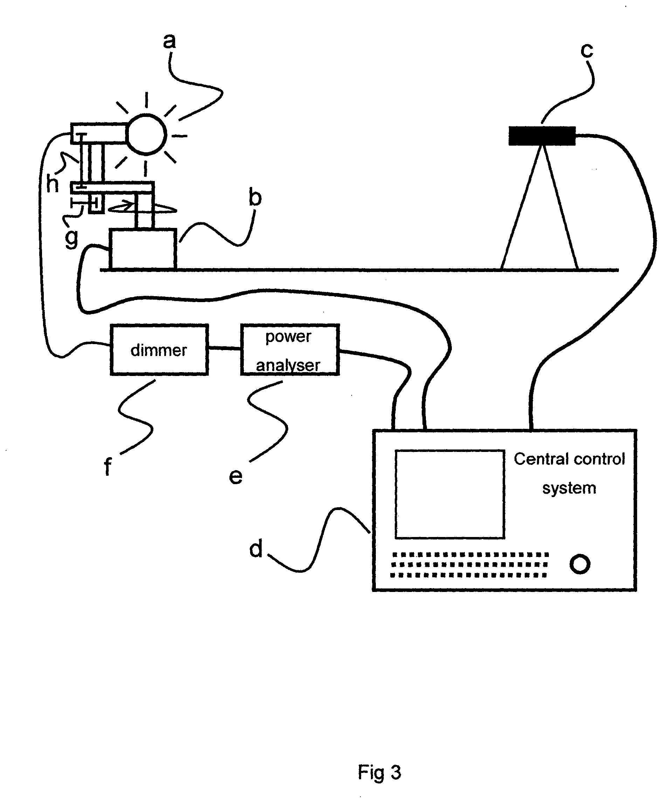

Such a one axis radial light distribution measurement device could be made by constructing a mechanical measurement device as show in fig 3, where the light source is shown in fig 3 (a). In this case a light bulb is mounted on a motorized rotating platform in fig 3 (b). At a certain distance a light measurement spectrometer, shown in fig 3 (c) is placed to measure the resulting light coming from the light source in fig 3 (a). All 3 devices are connected to a central control system fig 3 (d) that has a pre-selected light field distribution stored. The central control system in fig 3 (d) then first measures the light source in fig 3 (a) by making a series of measurements while fig 3 (b) rotates the light source 360 degrees, while storing the series of light measurement according to the angle of the light source in fig 3 (a). After the measurement cycle has been completed the combined light output can be calculated based on the pre-selected light field distribution.

Furthermore can a measurement be done even simpler if we know the complete field of distribution as shown in fig 1. and make a measurement at a certain known point in the field can we then calculate the combined output. This could be very useful when it is desired to measure a certain fixture type quickly, the user could the first select a known fixture/lamp type and then make one measurement at a known point on the fixture and at a know distance from the point, where the system subsequently quickly can calculate the combined light output.

Additionally a power analyser, as in fig 3 (e), can be added to the measurement so that the power used by the light source and detailed AC power information such as power factor, harmonic currents and noise etc. can be added to the measurement result.

To further expand the parameters that can be measured a dimmer can be added as shown in fig 3 (f). This dimmer is capable of dimming the light source at any level and at any dimming method and is controlled by the central control system in fig 3 (d) Measuring the light output at different dimmer levels can determine whether a light source is dimmable or non dimmable extending the number of measurement parameters that can be measured.

These power measurements can be further enhanced by measuring light level values over time and thereby determining the shift of light intensity over time, also known as flickering. A light source is in some cases connected to an AC supply or/and dimmed at a certain frequency, which can result in the supply frequency being transferred to the light illuminated by a light source. Measuring this flickering can be beneficial for examining the light source.

Measuring the flickering of a light source requires the light measurement spectrometer in fig 3 (c) to be able to make a series of fast successive light measurements. Spectrometers capable of fast successive light measurements tend to be quite costly, but by thinking in a new way we can create such a measurement tool by using a low cost spectrometer. As explained before the flickering of a light bulb will be dependent on the frequency of the electrical current applied. If we have this information can we also conclude that the flickering must be in phase with the frequency of the current applied.

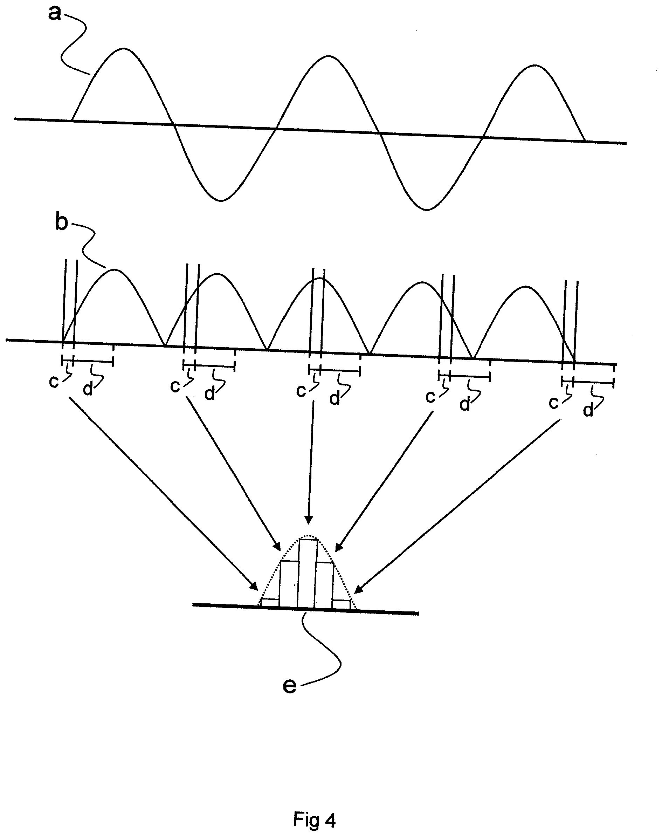

If we then start each measurement cycle of the spectrometer at different points along the whole frequency period as shown in fig 4. The supplied current is shown in fig 4 (a) and the corresponding light output of the light source can be seen in fig 4 (b) (as a result of the supplied current). We can then build up bit-by-bit the whole flicker curve according to the supplied frequency of the current. A low cost spectrometer is capable of making short enough integration times as shown in fig 4 (c) to enable such a measurement to be characterized as successful. It is the post processing time, shown in fig 4 (d), that takes a long time. Fig 4 (e) shows how this moving offset sequence measurement can be achieved.

Furthermore ensuring during normal operation that each measurement is done in phase with the supplied current will also eliminate differences between measurement due to flickering created from alternating supplied currents as described above, thus eliminating the need for long integration times of the light measurement spectrometer.

We have now created a cost efficient system capable of making a whole range of measurements of a light source.

Using the innovation described earlier to measure the light output poses some issues of how accurate the measurement can be. In the majority of cases the accuracy of the previous method will be enough to fulfil most practical needs.

If we take a look at fig 3 we can see that the light measurement spectrometer fig 3 (c) is placed at a certain distance from the light source in fig 3 (a). This distance is desired to be as short as possible in order to limit the size of the measurement device so as to make it portable.

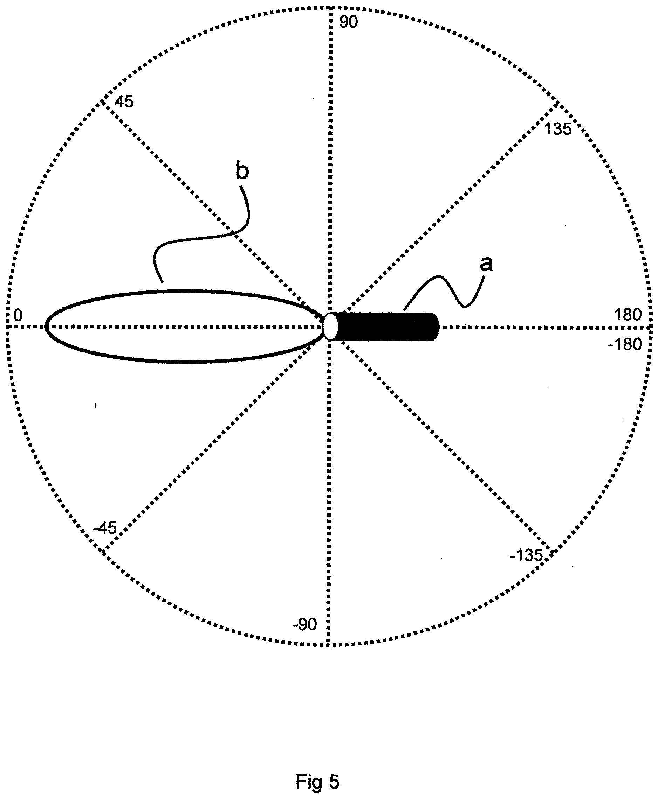

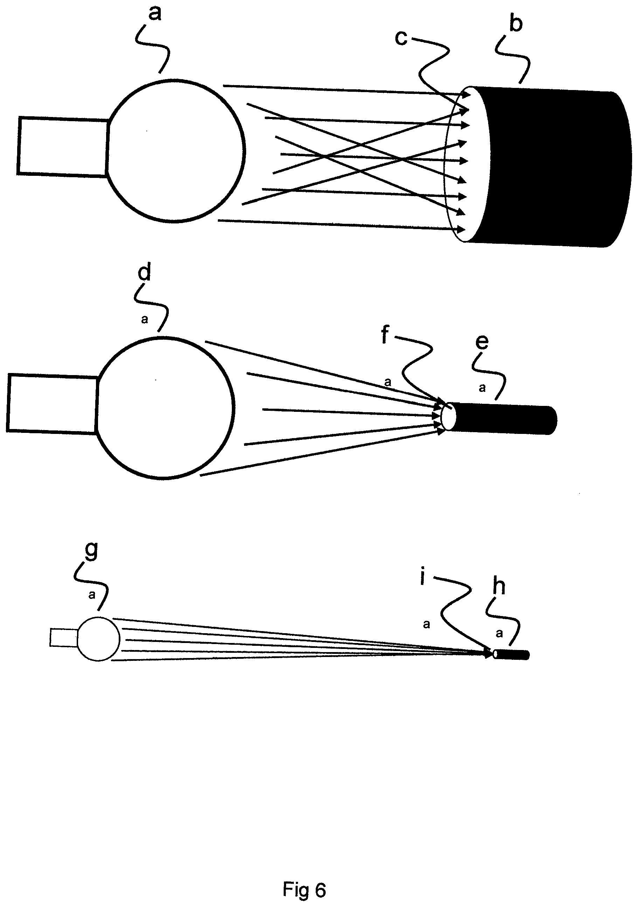

Furthermore, the directional sensitivity of the light measurement probe influences how a measurement should be evaluated. This is illustrated in fig 5 where fig 5 (a) represents a light measurement probe and fig 5 (b) represent the field of sensitivity of the probe in one plane. The directional sensitivity influences the measurement of a light source with a larger aperture than the aperture of the light measurement probe. Therefore the aperture of the light measurement probe of the spectrometer influences the accuracy of the measurement, as illustrated in fig 6.

A light source like a light bulb illuminates light in all possible directions from everywhere around the surface of the light bulb. When we want to measure the light in a certain direction we want all the light in that direction to be measured. This means that if we want to include all the light that travels in a certain direction from everywhere on the surface of the light, the aperture of the light probe must be of the same size as the light source. This can be seen in fig 6 where the aperture fig 6 (c) of the measurement probe fig 6 (b) has the same size as the light source fig 6 (a). However, this measurement method would limit the variety of light sources, which can be measured with an acceptable margin of error (in a portable system where the light measurement sensor is placed close to the light source).

Fig 6 (d, e, f) illustrates a different scenario where the measurement probe fig 6 (e) is substantially smaller than the light source fig 6 (d). This results in the probe aperture fig 6 (f) not being able to collect all parallel directional light, thereby reducing the angle differential, since the aperture of the light measurement probe in fig 6 (e) is smaller.

In order to minimize the error the light measurement probe must be moved further away from the source as shown in fig 6 (g, h, i), which makes the angle of the light entering the measurement probe aperture more parallel as shown in fig 6 (i), but results in the probe fig 6 (g) being placed further away and thereby makes the systems significantly less portable

This poses some problems when accurate light measurements are to be made in a small portable system.

To make measurements more accurate we must have information about the size of the light source being measured and the angular sensitivity fig 5 (b) parameters of the measurement probe fig 5 (a). In this way the central control system fig 3 (d) can calculate the error and thereby calculate an accurate result for the user. The angular sensitivity of the measurement probe in fig 5 (b) is a fixed set of parameters that can be stored in the control system so the user only needs to select from a list of pre-set types of light source types or/and enter the physical dimensions of the light source for the central control system to have information about the field distribution of the light of the light source and to calculate an accurate result.

Pre-stored types of light sources could for example be created by measuring a known light source of a certain physical shape such as a light bulb which has a circular shape. The know parameters of this light source could have been obtained by having previously measured the light source with known laboratory equipment to determine combined light output spectral information etc. The light source could then be used to calibrate the measurement system in fig 3. Measured values would be corrected by the central control system in fig 3 (d) to match the laboratory measurement data. A similar calibration measurement could be made for a series of light sources and stored in the central control system in fig 3 (d), thus making a serie of selectable presets for users of different light source types.

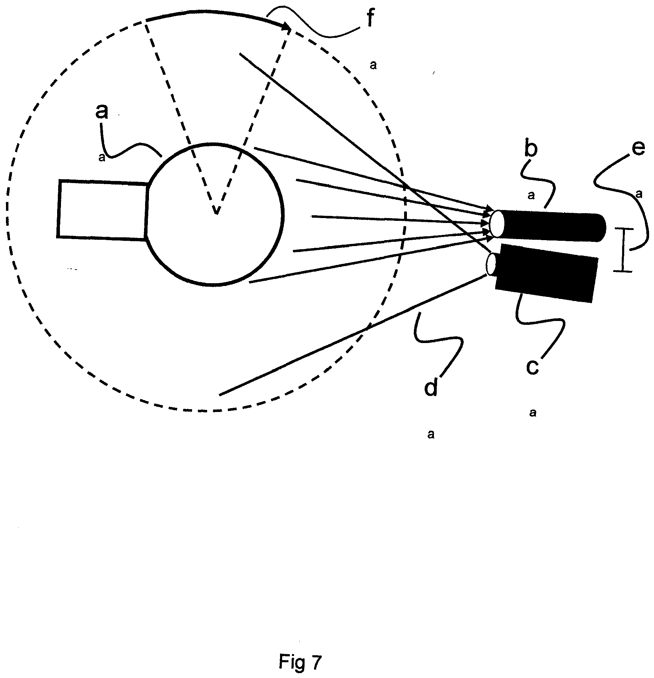

To automate the procedure of making accurate measurements to any kind of light source with any kind of field distribution we can add an optical camera to the measurement. Fig 7 shows this setup with an optical camera fig 7 (c) with an angle of view larger than the largest light source desired to be measured shown in fig 7 (d). The camera is able to supply a continuous flow of images that can then be used to determine the physical dimensions and light distribution of any light source. In this way many different light sources can be measured in a simple way with a little distance to measurement probe and limited input from the user and with minimal measurement error.

This optical camera should be placed as close to the light measurement probe fig 7 (b) as possible to minimize errors, or it could be an integral part of the light measurement device, or the optical camera itself could be a light measuring device if it has the right spectral response to make correct light measurements, however it would limit the number of measurements that could be made due to the lack of full spectral information. For instance CRI could not be measured and colour information could not be measured accurately by only using a camera.

When using a measurement probe together with a camera, the problem of error due to the distance between the camera and the measurement probe, shown in fig 7 (e), can be solved by how the data from the 2 devices is handled by the central control system. We know that the light source will be rotated 360 degrees in order to obtain the angular light distribution. Fig 7 shows an angular rotation of a light source seen from above compared to Fig 3. The light source in fig 7 (a) is rotated at a certain angle, fig 7 (f), over a specific time. If we then buffer the series of data sampled over time from the light measuring probe fig 7 (b) until the light source fig 7 (a) would be at the same position in respect to the optical camera in fig 7 (c) we would be able to get two equal measurements, which could then give optical information about the light source in fig 7 (a) as if they had been placed in the same position.

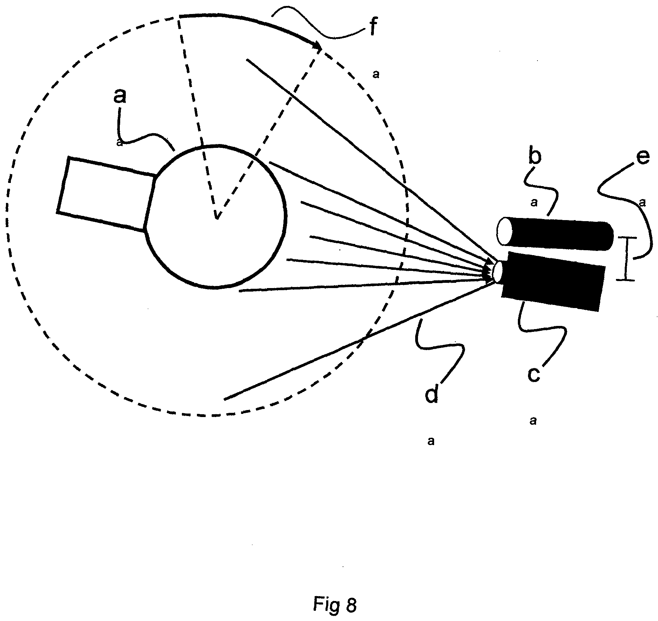

Fig 8 shows that the light source in fig 8 (a), after being rotated at a certain time, have the same angle to the optical camera as it previously had to the light measurement probe, as show in fig 7. This means that any error due to the distance in fig 7 (e) between the optical camera and the light probe would be completely eliminated. Buffering measurement data from the light probe (or the optical camera) is one way to eliminate this problem. Another way to eliminate this problem would be to first complete the series of measurements and then afterwards shift the series of data with an appropriate offset so that the data correlate according to position and thereby are aligned.

We have now created a complete measurement system of limited physical size that can measure different light sources of different dimensions, which will make measurement much easier than previously possible.

Fig 3 shows how such as measurement system could be assembled. Fig 3 illustrates that the light source in fig 3 (a) must be centred relative to the centre of rotation made by the rotating platform driven by the motor in fig 3 (b). The elevation in fig 3 (h) of the light source must also be centred. This can be done manually by the user but could also be done automatically.

One way to do this would be to enable the central control system in fig 3 (d) to set the distance in fig 3 (g) and 3 (h) by using a motorized system connected to the central control system where the central control system in fig 3 (d) changes the distance fig 3 (g) and 3 (h) individually while measuring the level of light output simultaneously via the light measurement device in fig 3 (c) to determine the centre, assuming that the light measurement device has a known peak sensitivity as illustrated in fig 5 (b).

If our measurement device also consisted of a camera as shown in fig 7 (c) this could also be used to determine the position of the light source. The light source can also be rotated by the central control system during this process in order to enhance the possibility of finding an accurate centre of a light source, prior to the actual measurement.

## Claims

1. A light measurement system comprising:
• a light source (a) to be measured, which is any device capable of producing light, and
• a pre-calibrated light measuring sensor (c) placed at a known distance from said light source, including
• a control system (d) adapted to obtain data from said sensor (c) and to rotate said light source (a) around an axis over time and to save a series of light measurements obtained by said light measuring sensor (c) while the light source (a) is rotated, thereby obtaining an angular light distribution in one plane of complete light output distribution field (b) of said light source (a),
• **characterized in that** said control system (d) is adapted to calculate from said angular light output distribution measurement in one plane the total combined light output corresponding to the total amount of light output by said light source (a) based on information about the shape of the light field and at which orientation the light source was measured as derived from a previous reference measurement of the same light source and/or based on a default or user or preselected light distribution field information matching said light source.

2. A light measurement system as described in claim 1, wherein one light output measurement is made at a known physical point at a defined distance from the light source (a), thereby enabling said central control (a) system to calculate total combined light output by using said light output measurement , said defined distance and the known complete field of distribution of the light source.

3. 6-A light measurement system as described in claim 1, wherein said light measuring sensor (c) furthermore can obtain light flickering levels from said light source (a).

4. A light measurement system as described in claim 1, wherein said light measuring sensor (c) is a light measurement spectrometer.

5. light measurement system as described in claim 1, wherein said light measuring system includes an optical camera.

6. A light measurement system as described in claim 1, 4 and 5, wherein said light measuring system includes a combination of a spectrometer sensor and optical camera.

7. A light measurement system as described in claim 1, 4, 5 and 6, wherein said control system (d) is adapted to obtain data from both a spectrometer sensor and optical camera and calculate light output.

## Patentansprüche

1. Alight-Messsystem bestehend aus:
• eine zu messende Lichtquelle (a), bei der es sich um ein beliebiges Gerät handelt, das Licht erzeugen kann, und
• einen vorkalibrierten Lichtmesssensor (c), der in einem bekannten Abstand von der Lichtquelle platziert ist, einschließlich
• ein Steuersystem (d), das so ausgelegt ist, dass es Daten von dem Sensor (C) erhält und die Lichtquelle (a) im Laufe der Zeit um eine Achse dreht und eine Reihe von Lichtmessungen speichert, die der Lichtmesssensor (c) während des Lichteinfalls erhält die Quelle (a) gedreht wird, wodurch eine Winkellichtverteilung in einer Ebene des gesamten Lichtausgangsverteilungsfeldes (b) der Lichtquelle (a) erhalten wird,
• **dadurch gekennzeichnet, dass** das Steuersystem (d) so ausgelegt ist, dass es aus dem Winkel berechnet
Messung der Lichtleistungsverteilung in einer Ebene. Die gesamte kombinierte Lichtleistung entspricht der Gesamtmenge der von der Lichtquelle ausgegebenen Lichtmenge (a), basierend auf Informationen über die Form des Lichtfelds und die Ausrichtung der Lichtquelle, abgeleitet aus a vorherige Referenzmessung derselben Lichtquelle und/oder basierend auf einer Standard- oder Benutzer- oder vorgewählten Lichtverteilungsfeldinformation, die mit der Lichtquelle übereinstimmt.

2. Lichtmesssystem wie in Anspruch 1, beschrieben
Eine Lichtleistungsmessung wird an einem bekannten physischen Punkt in einem definierten Abstand von der Lichtquelle (a) durchgeführt, wodurch das zentrale Steuersystem (a) in die Lage versetzt wird, die gesamte kombinierte Lichtleistung unter Verwendung der Lichtleistungsmessung, des definierten Abstands und der zu berechnen bekanntes vollständiges Verteilungsfeld der Lichtquelle.

3. Lichtmesssystem wie in Anspruch 1, beschrieben
Der Lichtmesssensor (c) kann außerdem Lichtflackerniveaus von der Lichtquelle (a) ermitteln.

4. Lichtmesssystem wie in Anspruch 1, beschrieben
der Lichtmesssensor (c) ein Lichtmessspektrometer ist.

5. Lichtmesssystem wie in Anspruch 1, beschrieben
das Lichtmesssystem umfasst eine optische Kamera.

6. Lichtmesssystem wie in Anspruch 1. 4 und 5, beschrieben
Das Lichtmesssystem umfasst eine Kombination aus einem Spektrometersensor und einer optischen Kamera.

7. Lichtmesssystem wie in Anspruch 1, 4, 5 und 6, beschrieben
das Steuersystem (d) so ausgelegt ist, dass es Daten sowohl von einem Spektrometersensor als auch von einer optischen Kamera erhält und die Lichtleistung berechnet.

## Revendications

1. Système de mesure d'éclairage comprenant :
• une source lumineuse (a) à mesurer, qui est tout dispositif capable de produire de la lumière, et
• un capteur de mesure de lumière pré-calibré (c) placé à une distance connue de ladite source lumineuse, comprenant
• un système de commande (d) adapté pour obtenir des données dudit capteur (C) et pour faire tourner ladite source de lumière (a) autour d'un axe dans le temps et pour enregistrer une série de mesures de lumière obtenues par ledit capteur de mesure de lumière (c) tandis que la lumière la source (a) est tournée, obtenant ainsi une distribution de lumière angulaire dans un plan du champ de distribution de sortie de lumière complet (b) de ladite source de lumière (a),
• **caractérisé en ce que** ledit système de commande (d) est adapté pour calculer à partir dudit angle mesure de la distribution de la sortie lumineuse dans un plan la sortie lumineuse combinée totale correspondant à la quantité totale de sortie lumineuse par ladite source lumineuse (a) sur la base d'informations sur la forme du champ lumineux et à quelle orientation la source lumineuse a été mesurée comme dérivée d'un mesure de référence précédente de la même source lumineuse et/ou basée sur un défaut ou un utilisateur ou des informations de champ de distribution de lumière présélectionnées correspondant à ladite source lumineuse.

2. Système de mesure de luminosité selon la revendication 1, dans lequel
une mesure de puissance lumineuse est effectuée en un point physique connu à une distance définie de la source lumineuse (a), permettant ainsi audit système de commande central (a) de calculer la puissance lumineuse combinée totale en utilisant ladite mesure de puissance lumineuse, ladite distance définie et la champ de distribution complet connu de la source lumineuse.

3. Système de mesure de luminosité selon la revendication 1, dans lequel
ledit capteur de mesure de lumière (c) peut en outre obtenir des niveaux de scintillement lumineux à partir de ladite source de lumière (a).

4. Système de mesure de luminosité selon la revendication 1, dans lequel
ledit capteur de mesure de lumière (c) est un spectromètre de mesure de lumière.

5. Système de mesure de luminosité selon la revendication 1, dans lequel
ledit système de mesure de lumière comprend une caméra optique.

6. Système de mesure de la lumière selon l'une quelconque des revendications 1 à 5. 4 et 5, où
ledit système de mesure de la lumière comprend une combinaison d'un capteur spectrométrique et d'une caméra optique.

7. Système de mesure de luminosité selon la revendication 1, 4, 5 et 6, dans lequel
ledit système de commande (d) est adapté pour obtenir des données à la fois d'un capteur de spectromètre et d'une caméra optique et pour calculer la sortie de lumière.
